(19) Europäisches Patentamt
European Patent Office
Office européen des brevets

(11) **EP 4 372 116 A1**

(12) **EUROPEAN PATENT APPLICATION**
published in accordance with Art. 153(4) EPC

(43) Date of publication:
**22.05.2024 Bulletin 2024/21**

(21) Application number: **21950145.9**

(22) Date of filing: **14.07.2021**

(51) International Patent Classification (IPC):
**C22C 38/00** $^{(2006.01)}$    **C22C 38/54** $^{(2006.01)}$
**C21D 6/00** $^{(2006.01)}$    **C21D 8/02** $^{(2006.01)}$

(52) Cooperative Patent Classification (CPC):
**C22C 38/00; C22C 38/54;** C21 6/00; C21D 8/02;
Y02E 20/16; Y02P 10/20

(86) International application number:
**PCT/JP2021/026457**

(87) International publication number:
**WO 2023/286204 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NIPPON STEEL CORPORATION**
**Chiyoda-ku**
**Tokyo 100-8071 (JP)**

(72) Inventors:
• **HIRATA, Hiroyuki**
**Tokyo 100-8071 (JP)**

• **TANAKA, Katsuki**
**Tokyo 100-8071 (JP)**
• **TAKIGUCHI, Masayuki**
**Tokyo 100-8071 (JP)**
• **YOSHIZAWA, Mitsuru**
**Tokyo 100-8071 (JP)**
• **HIGUCHI, Junichi**
**Tokyo 100-8071 (JP)**
• **OSUKI Takahiro**
**Tokyo 100-8071 (JP)**

(74) Representative: **Zimmermann & Partner**
**Patentanwälte mbB**
**Postfach 330 920**
**80069 München (DE)**

(54) **FERRITIC HEAT-RESISTANT STEEL**

(57) Provided is a heat-resistant ferritic steel having a chemical composition containing, by mass%, C: 0.07 to 0.14%, Si: 0.15 to 0.35%, Mn: 0.30 to 0.55%, P: 0.0250% or less, S: 0.0030% or less, Ni: 0.15 to 0.35%, Cr: 8.0 to 9.7%, Mo: 0.20 to 0.60%, W: 1.50 to 2.30%, V: 0.16 to 0.25%, Nb: 0.020 to 0.120%, B: 0.0010 to 0.0050%, N: 0.010 to 0.080%, Al: 0.020% or less, and O: 0.020% or less, with the balance Fe and impurities, wherein $V_{ER}$, i.e., the V content (mass %) in precipitates obtained by extracted residue analysis satisfies [- 0.2 × C + 0.060 ≤ $V_{ER}$ ≤ - 0.1 × C + 0.160].

**Description**

TECHNICAL FIELD

The present invention relates to a heat-resistant ferritic steel.

BACKGROUND ART

Heat-resistant ferritic steels are not only more inexpensive than austenitic and Ni-based heat-resistant alloys, but also have the advantage as high-temperature steels of having a low thermal expansion coefficient, and are therefore widely applied to equipment used at high temperatures, such as thermal power generation boilers.

In recent years, coal-fired power generation has been using higher-temperature and higher-pressure steam conditions to improve thermal efficiency, and future plans call for operations at ultra-supercritical pressure conditions of 650°C and 350 atm. Higher steam temperatures are also being used in exhaust heat recovery boilers for gas turbine combined generation.

In order to cope with such severe steam conditions, a number of heat-resistant ferritic steels with enhanced creep strength have been proposed.

For example, Patent Document 1 discloses a high strength heat-resistant ferritic steel containing, by mass%, C: 0.03 to 0.12%, Cr: 8.0 to 13.0%, W: 1.8 to 3.0%, V: 0.05 to 0.30%, and Nb: 0.02 to 0.12%.

Patent Document 2 discloses a high Cr heat-resistant ferritic steel with excellent high temperature strength and toughness containing, by mass%, C: 0.02 to 0.15%, Cr: 8 to 16%, V: 0.1 to 0.3%, Nb: 0.01 to 0.2%, B: 0.001 to 0.02%, and one or two of Mo: 0.01 to 1.2% and W: 0.8 to 3.5%.

Patent Document 3 discloses a high to strength heat-resistant ferritic steel containing, by mass%, C: 0.01 to 0.30%, Cr: 8.00 to 13.00%, W: 0.10 to 5.00%, Mo: 0.01 to 3.00%, V: 0.002 to 0.800% and Nb: 0.002 to 0.500%.

Patent Document 4 discloses a heat-resistant ferritic steel with excellent high temperature strength containing, by mass%, C: 0.01 to 0.08%, Cr: 8.00 to 13.00%, W: more than 1.50% and 3.50% or less, Mo: 0.50% or less, V: 0.10 to 0.30%, and Nb: 0.01 to 0.15%.

Patent Document 5 discloses a high strength heat-resistant cast steel containing, by mass%, C: 0.06 to 0.16%, Cr: 8 to 12%, W: 1.9 to 3.0%, Mo: 0.7% or less, V: 0.05 to 0.3% and a total of one or more of Nb, Ta and Zr of 0.01 to 0.15%.

LIST OF PRIOR ART DOCUMENTS

PATENT DOCUMENT

Patent Document 1: JP61-231139A

Patent Document 2: JP7-62497A

Patent Document 3: JP8-218154A

Patent Document 4: JP10-287960A

Patent Document 5: JP2007-92123A

SUMMARY OF INVENTION

TECHNICAL PROBLEM

Although these heat-resistant ferritic steels certainly have excellent service performance, it has been found that when used at high temperatures, the creep strength may vary; specifically, the time until fracture occurs under a certain stress may be shorter. Therefore, it is strongly desired that excellent high temperature strength be obtained in a stable manner.

The present invention was made in view of the present situation described above, and an object thereof is to provide a heat-resistant ferritic steel having stable and excellent creep strength when used at high temperatures.

The summary of the present invention is a heat-resistant ferritic steel described below.

(1) A heat-resistant ferritic steel having a chemical composition containing, by mass%,

C: 0.07 to 0.14%,
Si: 0.15 to 0.35%,
Mn: 0.30 to 0.55%,
P: 0.0250% or less,
S: 0.0030% or less,
Ni: 0.15 to 0.35%,
Cr: 8.0 to 9.7%,
Mo: 0.20 to 0.60%,
W: 1.50 to 2.30%,
V: 0.16 to 0.25%,
Nb: 0.020 to 0.120%,
B: 0.0010 to 0.0050%,
N: 0.010 to 0.080%,
Al: 0.020% or less, and
O: 0.020% or less,
with the balance Fe and impurities,
wherein the chemical composition satisfies Formula (i) below:

$$- 0.2 \times C + 0.060 \leq V_{ER} \leq - 0.1 \times C + 0.160 \quad \ldots \text{(i)}.$$

Here, the meaning of each symbol in Formula (i) is as follows:

C: C content in the steel (mass %)
$V_{ER}$: V content in precipitates obtained by extracted residue analysis (mass %).

(2) The heat-resistant ferritic steel described in (1) above, wherein the chemical composition contains, in lieu of a part of Fe, by mass%, one or more selected from

Sn: 0.0200% or less, and
As: 0.0200% or less.

(3) The heat-resistant ferritic steel described in (2) above, wherein the chemical composition contains, by mass%,

P: 0.0030 to 0.0250%, and
satisfies Formula (ii) below:

$$0.0005 \leq Sn+As \leq -2 \times P+0.0600 \ldots \text{(ii)}.$$

Here, the element symbols in the above formula represent the content (mass %) of each element.

(4) The heat-resistant ferritic steel described in any one of (1) to (3) above, wherein the chemical composition contains, in lieu of a part of Fe, by mass%,
Nd: 0.0005 to 0.0400%.

(5) The heat-resistant ferritic steel described in any one of (1) to (4) above, wherein the chemical composition contains, in lieu of a part of Fe, by mass%, one or more of selected from:

Cu: 0.50% or less,
Co: 0.50% or less,
Ti: 0.20% or less,
Ta: 0.20% or less,
Ca: 0.0150% or less,
Mg: 0.0150% or less, and
REM: 0.0400% or less.

ADVANTAGEOUS EFFECT OF INVENTION

According to the present invention, heat-resistant ferritic steel having excellent creep strength can be obtained in a stable manner when used at high temperatures.

DESCRIPTION OF EMBODIMENTS

In order to solve the aforementioned problems, the present inventors conducted a detailed investigation on relationship between creep strength and microstructure in heat-resistant ferritic steels containing 0.07 to 0.14% of C and 0.16 to 0.25% of V, respectively. As a result, the following findings were revealed.

(a) V-contained carbides and carbonitrides had precipitated in the heat-resistant ferritic steel before a creep test. In addition, V-contained carbides and carbonitrides (hereinafter referred to as V-containing precipitates) were newly precipitated also during the test at high temperatures, and their size was finer than the precipitates that already had precipitated before the test.

(b) The steels where a large amount of V-containing precipitates had precipitated before the test exhibited good creep strength in a creep test at high stress (corresponding to the early stages of use because the steel breaks in a short time). On the other hand, the steels where V-containing precipitates had precipitated excessively before the test had a shorter rupture time in a creep test at low stress (corresponding to long-term use because it breaks after a long period of time), and the precipitates coarsened faster during use.

(c) In addition, when the C content was high, good creep strength was likely to be obtained in the high stress creep test, but in the low stress creep test, V-containing precipitates coarsened quickly and the rupture time varied widely. From the above results, it was inferred that the reasons for the variation in creep strength were as follows.

(d) Carbides and carbonitrides of V which are present in the steel before use contribute to an increase in creep strength in the early stages of use due to their precipitation strengthening ability. Therefore, when their precipitation amount is high, good creep strength is obtained in the early stages of use.

(e) On the other hand, during use, V-containing precipitates precipitate more finely inside grains and contribute to maintaining creep strength during long-term use. However, if coarse V-containing precipitates are excessively precipitated before use, the fine precipitates are dissolved due to the interfacial energy difference caused by the difference in the size of the precipitates, which promotes the growth of the surrounding coarse precipitates. This results in a reduction of creep strength during long-term use.

(f) Furthermore, when the C content is high, the dislocation density of the steel matrix before use is high, which results in higher creep strength in the early stages of use, but the faster lattice diffusion of alloying elements accelerates the growth of surrounding precipitates that accompanies the dissolution of V-containing precipitates, resulting in a reduction in creep strength.

After various studies, the present inventers have found that by appropriately controlling the amount of V-containing precipitates present in the steel before use (as-manufactured), i.e., the V content in the precipitates obtained by extracted residue analysis, depending on the C content in the steel, good creep strength can be obtained stably in the early stages of use and during long-term use.

Furthermore, the present inventors have found that the inclusion of either or both of Sn and As imparts an effect of improving corrosion resistance in heat-resistant ferritic steels where stable creep strength can be obtained by controlling the V content analyzed in the extracted residues depending on the C content in the steel as described above.

However, it has been found that sufficient toughness may not be obtained stably when Sn and/or As are contained for the purpose of increasing corrosion resistance, when used in applications, for example, such as piping of an exhaust heat recovery boiler where stops and operates are repeated according to the required power generation amount; thus, heating to high temperature and cooling to normal temperature are repeated.

In order to solve this problem, the present inventors carried out a detailed investigation of heat-resistant ferritic steels containing Sn and As in a total amount of more than 0.0005%. As a result, the following findings has been revealed.

(g) Investigation on the toughness of steels subjected to repeated heating to high temperatures and cooling to normal temperature revealed that the toughness decreased with increasing Sn and As contents. Furthermore, the degree of decrease was more pronounced as the amount of P contained in the steel increased.

(h) Observation on fracture surfaces after the impact test showed that the fracture surface was mixed with regions that had fractured at prior austenite grain boundaries, and the proportion of such regions increased with increasing Sn and As contents. Sn and As were also detected on the fracture surfaces that fractured at the prior austenite grain boundaries. In addition to these elements, P was also detected simultaneously.

From the above results, the reasons for the reduced toughness were inferred as follows. The Sn, As and P contained in the steel segregate to the prior austenite grain boundaries during repeated heating to high temperatures and cooling down. All of these elements reduce the bonding strength of the grain boundary, and as a result, a reduction in toughness is presumed to occur.

After various studies, it was found that by strictly controlling an upper limit of the total content of Sn and As in the steel depending on the amount of P, the segregation of these elements at the grain boundaries in repeated heating-and-cooling processes during use can be reduced, and excellent toughness can be obtained.

The present invention was made based on the above findings. Each requirement of the present invention is described in detail below.

(A) Chemical composition

The reasons for the limitation of each element are as follows. In the following description, "%" for content means "mass %".

C: 0.07 to 0.14%

C is effective in obtaining a martensitic structure and also contributes to creep strength by generating fine carbides or carbonitrides. To obtain this effect, C needs to be contained at 0.07% or more. However, an excessive content accelerates the growth of precipitates, which adversely leads to a reduction in creep strength. The C content is therefore between 0.07 and 0.14%. The C content is preferably 0.08% or more, and more preferably 0.09% or more. The C content is preferably 0.13% or less, and more preferably 0.12% or less.

Si: 0.15 to 0.35%

Si is contained as a deoxidizing agent, and is also an effective element for its steam oxidation resistance properties. To achieve this effect, Si needs to be contained at 0.15% or more. An excessive content, however, leads to a reduction in ductility. Therefore, the Si content is set to between 0.15 and 0.35%. Si content is preferably 0.18% or more, and more preferably 0.20% or more. The Si content is preferably 0.32% or less, and more preferably less 0.30% or less.

Mn: 0.30 to 0.55%

Mn is contained as a deoxidizing agent as well as Si, but is also effective in obtaining a martensitic structure. To obtain this effect, Mn needs to be contained at least at 0.30%. However, an excessive content leads to creep embrittlement. Therefore, the Mn content is set to be between 0.30 and 0.55%. The Mn content is preferably 0.33% or more, and more preferably 0.35% or more. The Mn content is preferably 0.52% or less, and more preferably 0.50% or less.

P: 0.0250% or less

An excessive P content reduces creep ductility and impairs toughness. Therefore, the P content needs to be set to 0.0250% or less; the P content is preferably 0.0200% or less and more preferably 0.0180% or less. It is not necessary to set a specific lower limit for the P content, but an excessive reduction in P content will extremely increase the material cost. In addition, P contribute to no small extent to an increase in tensile strength and creep strength. Therefore, the P content is preferably 0.0030% or more, and more preferably 0.0050% or more.

S: 0.0030% or less

An excessive S content leads to a decrease in creep ductility. Therefore, the S content needs to be set to 0.0030% or less. The S content is preferably 0.0020% or less, and more preferably 0.0015% or less. The lower the S content, the more preferable, but an extreme reduction increases the material cost extremely. Therefore, the S content is preferably 0.0001% or more, and more preferably 0.0002% or more.

Ni: 0.15 to 0.35%

Ni is an effective element for obtaining a martensitic structure and ensuring creep strength. To obtain this effect, Ni needs to be contained at 0.15% or more. However, if Ni is contained in excess, the effect is saturated, and the material cost increases as it is an expensive element. Therefore, the Ni content is set to between 0.15 and 0.35%. The Ni content is preferably 0.18% or more, and more preferably 0.20% or more. The Ni content is preferably 0.32% or less, and more preferably 0.30% or less.

Cr: 8.0 to 9.7%

Cr is an effective element for ensuring steam oxidation resistance and corrosion resistance at high temperatures. Cr also precipitates as carbides and contributes to an improvement of creep strength. To achieve this effect, Cr needs to be contained at 8.0% or more. However, an excessive content reduces the stability of the carbides, which adversely reduces creep strength. The Cr content is therefore set to between 8.0 and 9.7%. The Cr content is preferably 8.3% or more, and more preferably 8.5% or more. The Cr content is preferably 9.5% or less, and more preferably 9.3% or less.

Mo: 0.20 to 0.60%

Mo is dissolved in the matrix and contributes to ensuring creep strength at high temperatures. To obtain this effect, Mo needs to be contained at 0.20% or more. However, even if Mo is contained in excess, the effect of improving creep strength is saturated, and the material cost increases as it is an expensive element. Therefore, the Mo content needs to be set to between 0.20 and 0.60%. The Mo content is preferably 0.25% or more, and more preferably 0.30% or more. The Mo content is preferably 0.55% or less, and more preferably 0.50% or less.

W: 1.50 to 2.30%

W is dissolved in the matrix or precipitates as an intermetallic compound during long-term use, thereby contributing to ensuring creep strength at high temperatures. To achieve this effect, W needs to be contained at 1.50 % or more. However, even if W is contained in excess, the effect on creep strength improvement is saturated and, as it is an expensive element, it increases the material cost. Therefore, the W content is set to between 1.50 and 2.30 %. The W content is preferably 1.60 % or more, and more preferably 1.70% or more. The W content is preferably 2.20% or less, and more preferably 2.10% or less.

V: 0.16 to 0.25%

V precipitates inside grains as fine carbides or carbonitrides and contributes to the creep strength. To obtain this effect, V needs to be contained at 0.16% or more. However, an excessive content accelerates the growth of the precipitates, which adversely leads to a reduction in creep strength. Therefore, the V content is set to between 0.16 and 0.25%. The V content is preferably 0.17% or more, and more preferably 0.18% or more. The V content is preferably 0.24% or less, and more preferably 0.23% or less.
The V content here means the total amount of V contained in the heat-resistant ferritic steel. That is, it means the sum of the V content that is dissolved in the matrix and the V content that exists as precipitates. In the present invention, in addition to the total amount of V satisfying the abovementioned V content range, the V content present as precipitates, i.e., the V content analyzed as electrolytic extracted residue, needs to satisfy the relationship with the C content described below.

Nb: 0.020 to 0.120%

Nb precipitates inside grains as fine carbides or carbonitrides and contributes to improvement of creep strength. In order to achieve this effect, Nb needs to be contained at 0.020% or more. However, if Nb is contained in excess, it precipitates in large amounts and coarsely, which adversely leads to a reduction in creep strength and creep ductility. Therefore, the Nb content is set to between 0.020 and 0.120%. The Nb content is preferably 0.030% or more, and more preferably 0.050% or more. The Nb content is preferably 0.100 % or less, and more preferably 0.080% or less.

B: 0.0010 to 0.0050%

B is effective in obtaining a martensitic structure, and is also dissolved in the carbides, finely dispersed and contributes to improved creep strength. To obtain this effect, B needs to be contained at 0.0010% or more. However, if B is contained in excess, it flows into the weld metal during welding and increases susceptibility to solidification cracking. Therefore, the B content is set to between 0.0010 and 0.0050%. The B content is preferably 0.0015% or more, and more preferably 0.0020% or more. The B content is preferably 0.0045% or less, and more preferably 0.0040% or less.

N: 0.010 to 0.080%

N precipitates as fine carbonitride during use at high temperatures, contributing to creep strength. To obtain this effect, N needs to be contained at 0.010% or more. However, an excessive content will adversely lead to a reduction in creep ductility. Therefore, the N content is set to 0.010 to 0.080%. The N content is preferably 0.020% or more, and more preferably 0.030% or more. The N content is preferably 0.070% or less, and more preferably 0.060% or less.

Al: 0.020% or less

Al is contained as a deoxidizing agent, but inclusion of a large amount of Al significantly impairs cleanliness and degrades workability, being also undesirable in terms of creep strength. Therefore, the Al content is set to 0.020% or less. The Al content is preferably 0.018% or less, and more preferably 0.015% or less. There is no need to set a specific lower limit for the Al content, but an extreme reduction thereof increases production costs. Therefore, the Al content is preferably 0.001% or more, and more preferably 0.002% or more.

O: 0.020% or less

O is present as an impurity, but in a large amount it reduces workability. Therefore, the O content shall be 0.020% or less. The O content is preferably 0.015% or less, and more preferably 0.010% or less. There is no need to set a specific lower limit for the O content, but an extreme reduction increases production costs. Therefore, the O content is preferably 0.001% or more, and more preferably 0.002% or more.

The V contained in the steel is partly present as carbides or carbonitrides in the steel in an as-manufactured state (before use) and contributes to creep strength in the early stages of use due to its precipitation strengthening ability. Furthermore, V-containing precipitates also precipitate finely during use to contribute to ensuring creep strength over a long term.

If the amount of V-containing precipitates is small, the precipitation strengthening ability is not obtained in the early stages of use and sufficient creep strength is not achieved. On the other hand, if the amount of V- containing precipitates is high in a pre-use state at high temperatures, creep strength is improved in the early stages of use, but if the amount is excessive, a reduction in creep strength during long-term use occurs. This is due to the interfacial energy difference caused by the difference in size between the precipitates present in the pre-use state and the fine precipitates that precipitate during use, which accelerates the growth of the precipitates and causes the precipitation strengthening ability to disappear early.

In particular, when the C content is high, the creep strength is higher at the early stages of use due to the high dislocation density of the matrix before use at high temperatures, but the lattice diffusion of alloying elements is faster and the growth of V-containing precipitates is accelerated. Thus, creep strength during long-term use is reduced and creep strength variations are more likely to occur.

Therefore, the amount of V-containing precipitates in the pre-use state needs to be controlled depending on the C content. The amount of the precipitates can be estimated as the V content in the precipitates obtained by extracted residue analysis. Specifically, the following Formula (i) needs to be satisfied in order to obtain stable and good creep strength.

$$- 0.2 \times C + 0.060 \leq V_{ER} \leq - 0.1 \times C + 0.160 \qquad \ldots (i)$$

Here, the meaning of each symbol in Formula (i) is as follows:

C: C content in steel (mass %),
$V_{ER}$: V content in precipitates obtained by extracted residue analysis (mass %).

The V content in the precipitates obtained by extracted residue analysis can be adjusted by the V content in the heat-resistant ferritic steel and the heat treatment during production.

For better creep strength in the early stages of use and during long-term use, the $V_{ER}$ is preferably [ - 0.2 × C + 0.065] or more, and more preferably [ - 0.2 × C + 0.075] or more. The $V_{ER}$ is preferably [ - 0.1 × C + 0.150] or less, and more preferably [ - 0.1 × C + 0.140] or less.

The V content in the precipitates obtained by extracted residue analysis is measured as follows.

A test piece of a given size is taken from heat-resistant ferritic steel. The test piece is anodically dissolved by a constant-current electrolytic method using a 10 volume% acetylacetone - 1 mass% tetramethylammonium chloride methanol solution as the electrolyte at a current density of 20 mA/cm$^2$, carbides and carbonitrides are extracted as residue. After acid decomposition of the extracted residue, ICP (high-frequency inductively-coupled plasma) emission analysis is performed to determine the mass of V in the residue. The mass of V in the residue is divided by the dissolved amount of the test material to determine the V content present as carbides and carbonitrides. In other words, this V content is the V content in the precipitates obtained by extracted residue analysis.

The heat-resistant ferritic steel of the present invention contains each of the abovementioned elements and the remainder consists of Fe and impurities. The term "impurities" refers to those which are mixed in during the industrial manufacture of steel materials due to various factors in the manufacturing process, including raw materials such as ores or scrap.

Furthermore, the heat-resistant ferritic steel of the present invention may contain Sn and/or As in lieu of a part of Fe. The reasons for this limitation are described below.

Sn: 0.0200% or less

Sn concentrates below the scale on the surface of the steel and is effective in improving corrosion resistance, particularly in environments such as waste heat recovery boilers where heating and cooling are repeated and condensed water tends to adhere to the surface. To achieve this effect, Sn may be contained as required. However, an essive content leads to a reduction in toughness before use. Furthermore, it reduces creep ductility when used at high temperatures. Therefore, if contained, the Sn content is set to less than 0.0200%.

In addition, in order to suppress grain boundary segregation during the process of heating and cooling in use and to suppress the reduction of toughness, it is desirable to satisfy Formula (ii) below in relation to As and P. If the above effects are to be obtained, the Sn content is preferably 0.0005% or more, more preferably 0.0008% or more, and even more preferably 0.0010% or more. The Sn content is preferably 0.0150% or less, and more preferably 0.0100% or less.

As: 0.0200% or less

As, like Sn, concentrates below the scale on the surface of the steel and is effective in improving corrosion resistance, particularly in environments such as waste heat recovery boilers where heating and cooling are repeated and condensed water tends to adhere to the surface. To achieve this effect, As may be contained as required. However, if contained in excess, it not only causes a reduction in toughness before use, but also segregates at the grain boundaries during the heating and cooling processes during use, leading to a further reduction in toughness. Therefore, if contained, the As content needs to be 0.0200% or less.

Furthermore, in order to suppress the segregation at the grain boundary during the process of heating and cooling during use and to suppress the reduction in toughness, it is preferable that the As content satisfy Formula (ii) below in relation to Sn and P. If the above effects are to be obtained, the As content is preferably 0.0005% or more, and more preferably 0.0008% or more, and even more preferably 0.0010% or more. The As content is preferably less than 0.0150%, and more preferably less than 0.0100%.

When Sn and As are contained in the heat-resistant ferritic steel of the present invention as described above, these elements segregate to the prior austenite grain boundaries in the process of repeated heating to high temperatures and cooling to normal temperature, reducing the bonding strength of the grain boundary and causing a reduction in toughness. Therefore, while the total content of the "Sn and/or As" is preferably set to be a certain amount or more, the total content needs to be strictly controlled depending on the content of P, which similarly segregates at the grain boundaries and causes embrittlement. Specifically, it is preferable that the following Formula (ii) be satisfied:

$$0.0005 \leq \mathrm{Sn} + \mathrm{As} \leq -2 \times \mathrm{P} + 0.0600 \qquad \dots \text{(ii)}.$$

Here, the elemental symbols in the above formula represent the content (mass %) of each element.

If excellent corrosion resistance is desired, the value of Sn+As is preferably 0.0010% or more, and more preferably 0.0020% or more. On the other hand, if the decrease in toughness is to be more reliably suppressed, the value of Sn + As is preferably [ -2 × P + 0.0550] or less. In addition, if further enhanced corrosion resistance is desired without compromising creep ductility, it is preferable that each of Sn and As be contained at 0.0005% or more.

Furthermore, the heat-resistant ferritic steel of the present invention may contain Nd in lieu of a part of Fe. The reasons for this limitation are described below.

Nd: 0.0005 to 0.0400%

Nd may be contained as needed to combine with S or P to remove its adverse effects and improve creep ductility. However, if contained in excess, Nd combines with oxygen, reducing cleanliness and degrading hot workability. Therefore, when Nd is contained, the content is set to between 0.0005 and 0.0400%. The Nd content is preferably 0.0010% or more, and more preferably 0.0030% or more. The Nd content is preferred 0.0350% or less, and more preferably 0.0300% or less.

In addition, the heat-resistant ferritic steel according to the present invention may contain one or more elements selected from Cu, Co, Ti, Ta, Ca, Mg, and REM in lieu of a part of Fe. The reasons for this are described below.

Cu: 0.50% or less

Cu, like Ni, is effective in generating a martensitic structure and may be contained as needed. An excessive content, however, reduces creep ductility. Therefore, the Cu content is set to 0.50% or less. The Cu content is preferably 0.40% or less, and more preferably 0.30% or less. When contained, the Cu content is preferably 0.01% or more, and more preferably 0.02% or more.

Co: 0.50% or less

Co, like Ni and Cu, is effective in generating a martensitic structure and may be contained as necessary. However, an excessive content of Co will saturate its effect and increase the cost since it is an expensive element. Therefore, the Co content is set to 0.50% or less. The Co content is preferably 0.40% or less, and more preferably 0.30% or less. When contained, the Co content is preferably 0.01% or more, and more preferably 0.02% or more.

Ti: 0.20% or less

Ti may be contained as necessary because it precipitates as fine carbides or carbonitrides during use at high temperatures and contributes to creep strength. However, if contained in excess, it precipitates in large amounts and coarsely, resulting in a decrease in creep strength and creep ductility. For that reason, the Ti content is set to 0.20% or less. The Ti content is preferably 0.15% or less, and more preferably 0.10% or less. When contained, the Ti content is preferably 0.01% or more, and more preferably 0.02% or more.

Ta: 0.20% or less

Ta may be contained as necessary because it precipitates as fine carbides and carbonitrides during use at high temperatures and contributes to the improvement of creep strength. However, if Ta is contained in excess, it precipitates in large amounts and coarsely, resulting in a decrease in creep strength and creep ductility. Therefore, the Ta content is set to 0.20% or less. The Ta content is preferably 0.15% or less, and more preferably 0.10% or less. When contained, the Ta content is preferably 0.01% or more, and more preferably 0.02% or more.

Ca: 0.0150% or less

Ca may be contained as necessary to improve hot workability in manufacturing. However, if contained in excess, Ca combines with oxygen and significantly reduces cleanliness, which adversely deteriorates hot workability. Therefore, the Ca content is set to 0.0150% or less. The Ca content is preferably 0.0120% or less, and more preferably 0.0100% or less. When contained, the Ca content is preferably 0.0005% or more, and more preferably 0.0010% or more.

Mg: 0.0150% or less

Like Ca, Mg may be contained as necessary to improve hot workability in manufacturing. However, if contained in excess, Mg combines with oxygen and significantly reduces cleanliness, which adversely deteriorates hot workability. Therefore, the Mg content is set to 0.0150% or less. The Mg content is preferably 0.0120% or less, and more preferably 0.0100% or less. When contained, the Mg content is preferably 0.0005% or more, and more preferably 0.0010% or more.

REM: 0.0400% or less

REM (rare earth elements), like Ca and Mg, may be contained as needed to improve hot workability in manufacturing. However, if contained in excess, REM combines with oxygen and significantly reduces cleanliness, which adversely deteriorates hot workability. Therefore, the REM content is set to 0.0400% or less. The REM content is preferably 0.0350% or less, and more preferably 0.0300% or less. When contained, the REM content is preferably 0.0005% or more, and more preferably 0.0010% or more.

"REM" is a generic term for a total of 17 elements of Sc, Y, and lanthanides, and REM content refers to the total content of one or more of the REM elements. In addition, REM is generally contained in mischmetals. Therefore, for example, mischmetals may be added to an alloy to make the REM content in the above range. Since Nd is also a type of REM, if other REMs are contained in addition to Nd, the total amount of them needs to be in the above range.

(B) Manufacturing method

The method of manufacturing the heat-resistant ferritic steel according to the present invention is described below.

Forming process:

First, a material is formed into the final shape of the heat-resistant ferritic steel. The forming process includes all processes that involve deformation to make the final shape, such as casting, forging, rolling process, etc.

The forming process includes, as an example, processing an ingot to a final shape, after raw materials is melted and cast, by hot forging, hot forging and hot rolling, or hot forging and hot rolling and cold working.

Normalizing heat-treatment process:

To obtain the heat-resistant ferritic steel of the present invention, after the forming process, the steel should be normalized at 1040 to 1 100°C for 0.08 to 1.00 hours. If the normalizing temperature is too low or the normalizing time is too short, the V-containing precipitates formed in the forming process are not sufficiently dissolved in the matrix, many undissolved coarse precipitates remain, and the precipitation amount of fine V-containing carbides decreases in the subsequent tempering heat-treatment. Resultantly, the creep strength is reduced, and the growth of precipitates is accelerated during long-term use due to the difference in interfacial energy between the coarse precipitates that were not dissolved in the normalizing heat-treatment and the fine precipitates that precipitate during use, which can easily lead to variations in creep strength. If the normalizing temperature is too high or the normalizing time is too long, the prior austenite grain size increases and the toughness decreases.

To keep $V_{ER}$ not more than [ -0.1 $\times$ C + 0.150], the normalizing temperature is preferably set to higher than 1050°C. To keep $V_{ER}$ not more than [ -0.1 $\times$ C + 0.140], the normalizing temperature is preferably set to higher than 1070°C. The normalizing time is preferably 0.10 to 0.75 hours.

Tempering heat-treatment process:

After the normalizing heat-treatment process, the heat-resistant ferritic steel of the present invention should be tempered at 740 to 800°C for 0.5 to 5.0 hours. If the tempering temperature is too low or the tempering time is too short, the precipitation amount of V-containing precipitates is small; hence sufficient precipitation strengthening ability is not obtained, resulting in lower creep strength in the early stages of use. In addition, dislocations introduced into the matrix during the normalizing heat-treatment process are not fully recovered, resulting in faster lattice diffusion of alloying elements and accelerated growth of V-containing precipitates during long-term use, which increases the possibility of the creep strength variations.

On the other hand, if the tempering temperature is too high or the tempering time is too long, although the amount of the V-containing precipitates is large, their size becomes larger, which reduces the precipitation strengthening ability, resulting in considerable decrease in creep strength in the early stages of use. In addition, the growth of precipitates is accelerated during use due to the difference in interfacial energy caused by the difference in size between coarse V-containing precipitates and fine precipitates that precipitate during use, which can easily lead to the creep strength variations. Furthermore, partial austenite transformation and formation of martensite with high dislocation density also contribute to the creep strength variations.

In order to obtain a $V_{ER}$ of [ -0.2 $\times$ C + 0.065] or higher, or [ -0.2 $\times$ C + 0.075] or higher, the tempering heat-treatment conditions are preferably set to 750°C or higher and for 1.0 hour or longer. On the other hand, to keep the $V_{ER}$ at [ -0.1 $\times$ C + 0.150] or lower, or [ -0.1 $\times$ C + 0.140] or lower, the tempering heat-treatment conditions is preferably set to 790°C or lower and for 4.0 hours or less.

The present invention will be described more specifically by means of the following examples. The present invention, however, is not limited to these examples.

EXAMPLE 1

Ingots of steel materials A to L having the chemical compositions shown in Table 1 were prepared by melting and casting in a laboratory, and hot forging and hot rolling were performed in sequence to form the ingots to a thickness of 15 mm. These steel materials were processed to plates 150 mm long and 150 mm wide.

[Table 1]

Table 1

| Steel | Chemical composition (mass%, balance: Fe and impurities) | | | | | | | | | | | | | | | | |
|---|---|---|---|---|---|---|---|---|---|---|---|---|---|---|---|---|---|
| | C | Si | Mn | P | S | Ni | Cr | Mo | W | V | Nb | B | N | Al | O | Sn | Others |
| A | 0.10 | 0.26 | 0.40 | 0.0151 | 0.0007 | 0.23 | 8.7 | 0.35 | 1.75 | 0.19 | 0.050 | 0.0028 | 0.040 | 0.008 | 0.009 | 0.0045 | - |
| B | 0.11 | 0.28 | 0.39 | 0.0143 | 0.0009 | 0.20 | 8.3 | 0.41 | 1.80 | 0.20 | 0.043 | 0.0030 | 0.042 | 0.009 | 0.010 | - | - |
| C | 0.09 | 0.20 | 0.52 | 0.0178 | 0.0012 | 0.30 | 8.3 | 0.48 | 1.71 | 0.17 | 0.030 | 0.0039 | 0.060 | 0.014 | 0.009 | 0.0012 | Cu: 0.15, Ti: 0.04, Nd: 0.0040, REM: 0.0055 |
| D | 0.08 | 0.21 | 0.49 | 0.0202 | 0.0015 | 0.31 | 8.6 | 0.44 | 1.73 | 0.18 | 0.032 | 0.0045 | 0.066 | 0.012 | 0.009 | - | Co: 0.18, Ta: 0.04, Ca: 0.0018 |
| E | 0.13 | 0.29 | 0.33 | 0.0072 | 0.0020 | 0.19 | 9.2 | 0.30 | 1.98 | 0.23 | 0.078 | 0.0020 | 0.032 | 0.006 | 0.010 | 0.0098 | - |
| F | 0.12 | 0.31 | 0.35 | 0.0109 | 0.0018 | 0.18 | 9.0 | 0.25 | 2.01 | 0.22 | 0.080 | 0.0016 | 0.021 | 0.007 | 0.011 | - | Mg: 0.0020, As: 0.0030 |
| G | 0.07 | 0.18 | 0.46 | 0.0158 | 0.0025 | 0.34 | 8.5 | 0.36 | 2.10 | 0.16 | 0.045 | 0.0034 | 0.037 | 0.008 | 0.008 | 0.0030 | - |
| H | 0.14 | 0.30 | 0.31 | 0.0231 | 0.0003 | 0.17 | 9.4 | 0.56 | 1.75 | 0.24 | 0.035 | 0.0021 | 0.042 | 0.009 | 0.008 | - | - |
| I | 0.08 | 0.32 | 0.31 | 0.0150 | 0.0011 | 0.17 | 9.5 | 0.26 | 1.61 | <u>0.27</u> | 0.108 | 0.0018 | 0.070 | 0.013 | 0.010 | - | - |
| J | 0.07 | 0.33 | 0.30 | 0.0182 | 0.0010 | 0.16 | 9.5 | 0.28 | 1.55 | <u>0.14</u> | 0.025 | 0.0019 | 0.051 | 0.014 | 0.009 | - | - |
| K | <u>0.05</u> | 0.29 | 0.32 | 0.0090 | 0.0020 | 0.19 | 9.4 | 0.26 | 1.64 | 0.16 | 0.030 | 0.0015 | 0.060 | 0.012 | 0.007 | - | - |
| L | <u>0.16</u> | 0.30 | 0.35 | 0.0119 | 0.0016 | 0.17 | 9.G | 0.27 | 1.60 | 0.17 | 0.097 | 0.0016 | 0.013 | 0.014 | 0.009 | - | - |

The resulting plates were heat-treated by normalizing and tempering under the conditions shown in Table 2 to make test materials.

[Table 2]

Table 2

| Test No. | Steel | Normalizing heat-treatment | | Tempering heat-treatment | | Left hand value of Formula (i) | $V_{ER}$ (mass%) | Right hand value of Formula (i) | Creep rupture test | | |
|---|---|---|---|---|---|---|---|---|---|---|---|
| | | Temperature (°C) | Time (hour) | Temperature (°C) | Time (hour) | | | | 600°C× 186MPa | 600°C× 157MPa | |
| A1 | A | 1075 | 0.50 | 780 | 1.0 | 0.040 | 0.085 | 0.150 | A | A | Inventive example |
| A2 | A | 1075 | 0.50 | 780 | 3.0 | 0.040 | 0.125 | 0.150 | A | A | |
| A3 | A | 1075 | 0.50 | 780 | 5.0 | 0.040 | 0.133 | 0.150 | A | B | |
| A4 | A | 1075 | 0.50 | 780 | 0. 5 | 0.040 | 0.049 | 0.150 | A | B | |
| A5 | A | 1075 | 0.50 | 780 | 7.0 | 0.040 | 0.153 | 0.150 | B | F | Comparative example |
| A6 | A | 1075 | 0.50 | 730 | 1.0 | 0.040 | 0.039 | 0.150 | F | B | |
| A7 | A | 1075 | 0.50 | 740 | 1.0 | 0.040 | 0.044 | 0.150 | B | B | Inventive example |
| AS | A | 1075 | 0.50 | 750 | 1.0 | 0.040 | 0.059 | 0.150 | A | A | |
| A9 | A | 1075 | 0.50 | 760 | 1.0 | 0.040 | 0.066 | 0.150 | A | A | |
| A10 | A | 1075 | 0.50 | 770 | 1.0 | 0.040 | 0,076 | 0.150 | A | A | |
| A11 | A | 1075 | 0.50 | 790 | 1.0 | 0.040 | 0.120 | 0.150 | A | A | |
| A12 | A | 1075 | 0.50 | 800 | 1.0 | 0.040 | 0.133 | 0.150 | B | B | |
| A13 | A | 1075 | 0.50 | 810 | 1.0 | 0.040 | 0.152 | 0.150 | B | F | Comparative example |
| A14 | A | 1075 | 0.05 | 780 | 1.0 | 0.040 | 0.152 | 0.150 | B | F | |
| A15 | A | 1075 | 0.25 | 780 | 1.0 | 0.040 | 0.128 | 0.150 | A | A | Inv.exam. |
| A16 | A | 1020 | 0.50 | 780 | 1.0 | 0.040 | 0.151 | 0.150 | B | F | Comp.exam. |

(continued)

| Test No. | Steel | Normalizing heat-treatment Temperature (°C) | Normalizing heat-treatment Time (hour) | Tempering heat-treatment Temperature (°C) | Tempering heat-treatment Time (hour) | Left hand value of Formula (i) | $V_{ER}$ (mass%) | Right hand value of Formula (i) | Creep rupture test 600°C×186MPa | Creep rupture test 600°C×157MPa | |
|---|---|---|---|---|---|---|---|---|---|---|---|
| A17 | A | 1090 | 0.50 | 780 | 1.0 | 0.040 | 0.070 | 0.150 | A | A | Inventive example |
| A18 | A | 1055 | 0.50 | 780 | 1.0 | 0.040 | 0.131 | 0.150 | A | B | |
| A19 | A | 1075 | 0.75 | 780 | 1.0 | 0.040 | 0.075 | 0.150 | A | A | |
| A20 | A | 1045 | 0.50 | 780 | 1.0 | 0.040 | 0.141 | 0.150 | B | B | |
| B1 | B | 1075 | 0.50 | 780 | 1.0 | 0.038 | 0.086 | 0.149 | A | A | |
| C1 | C | 1075 | 0.50 | 780 | 1.0 | 0.042 | 0.082 | 0.151 | A | A | |
| C2 | C | 1075 | 0.50 | 780 | 3.0 | 0.042 | 0.123 | 0.151 | A | A | |
| C3 | C | 1075 | 0.50 | 780 | 5.0 | 0.042 | 0.132 | 0.151 | A | B | |
| C4 | C | 1075 | 0.50 | 780 | 0.5 | 0.042 | 0.047 | 0.151 | A | B | |
| C5 | C | 1075 | 0.50 | 780 | 7.0 | 0.042 | 0.152 | 0.151 | B | F | Comp.exam. |
| C6 | C | 1075 | 0.50 | 740 | 1.0 | 0.042 | 0.042 | 0.151 | B | B | Inventive example |
| C7 | C | 1075 | 0.50 | 750 | 1.0 | 0.042 | 0.057 | 0.151 | A | A | |
| C8 | C | 1075 | 0.50 | 760 | 1.0 | 0.042 | 0.063 | 0.151 | A | A | |
| C9 | C | 1075 | 0.50 | 770 | 1.0 | 0.042 | 0.073 | 0.151 | A | A | |
| C10 | C | 1075 | 0.50 | 790 | 1.0 | 0.042 | 0.108 | 0.151 | A | A | |
| C11 | C | 1075 | 0.50 | 800 | 1.0 | 0.042 | 0.132 | 0.151 | B | B | |
| D1 | D | 1075 | 0.50 | 780 | 1.0 | 0.044 | 0.084 | 0.152 | A | A | |
| E1 | E | 1075 | 0.50 | 780 | 1.0 | 0.034 | 0.091 | 0.147 | A | A | |
| E2 | E | 1075 | 0.50 | 780 | 3.0 | 0.034 | 0.127 | 0.147 | A | A | |
| E3 | E | 1075 | 0.50 | 780 | 5.0 | 0.034 | 0.137 | 0.147 | A | B | |
| E4 | E | 1075 | 0.50 | 780 | 0.5 | 0.034 | 0.047 | 0.147 | A | B | |
| E5 | E | 1075 | 0.50 | 780 | 7.0 | 0.034 | 0.154 | 0.147 | B | F | Comp. exam, |

| Test No. | Steel | Normalizing heat-treatment | | Tempering heat-treatment | | Left hand value of Formula (i) | $V_{ER}$ (mass%) | Right hand value of Formula (i) | Creep rupture test | | |
|---|---|---|---|---|---|---|---|---|---|---|---|
| | | Temperature (°C) | Time (hour) | Temperature (°C) | Time (hour) | | | | 600°C× 186MPa | 600°C× 157MPa | |
| E6 | F | 1075 | 0.50 | 740 | 1.0 | 0.034 | 0.044 | 0.147 | A | B | Inventive example |
| E7 | E | 1075 | 0.50 | 750 | 1.0 | 0.034 | 0.061 | 0.147 | A | A | |
| E8 | E | 1075 | 0.50 | 760 | 1.0 | 0.034 | 0.071 | 0.147 | A | A | |
| E9 | E | 1075 | 0.50 | 770 | 1.0 | 0.034 | 0.080 | 0.147 | A | A | |
| E10 | E | 1075 | 0.50 | 790 | 1.0 | 0.034 | 0.122 | 0.147 | A | A | |
| E11 | E | 1075 | 0.50 | 800 | 1.0 | 0.034 | 0.135 | 0.147 | B | B | |
| F1 | F | 1075 | 0.50 | 780 | 1.0 | 0.036 | 0.088 | 0.148 | A | A | |
| G1 | G | 1075 | 0.50 | 780 | 1.0 | 0.046 | 0.079 | 0.153 | A | A | |
| H1 | H | 1075 | 0.50 | 780 | 1.0 | 0.032 | 0.093 | 0.146 | A | A | |
| I1 | I | 1075 | 0.50 | 780 | 1.0 | 0.044 | 0.122 | 0.152 | A | F | Comparative example |
| J1 | J | 1075 | 0.50 | 780 | 1.0 | 0.046 | 0.050 | 0.153 | F | F | |
| K1 | K | 1075 | 0.50 | 780 | 1.0 | 0.050 | 0.051 | 0.155 | F | F | |
| L1 | L | 1075 | 0.50 | 780 | 1.0 | 0.028 | 0.125 | 0.144 | A | F | |

$$-0.2 \times C + 0.060 \leq V_{ER} \leq -0.1 \times C + 0.160 \quad \cdots \quad (i)$$

EP 4 372 116 A1

[V content in precipitates obtained by extracted residue analysis]

A 10 mm square, 40 mm long test specimen was taken from the obtained test material, and the V content in the precipitates to be obtained by extracted residue analysis was measured by the method described above, i.e., the constant-current electrolysis method. Specifically, the test specimen was anodically dissolved at a current density of 20 mA/cm$^2$ by the constant-current electrolysis method using a 10 volume% acetylacetone - 1 mass% tetramethylammonium chloride methanol solution as the electrolyte, and carbides and carbonitrides were extracted as residue. After acid decomposition of the extracted residue, ICP emission analysis was performed to determine the mass of V in the residue. The mass of V in the residue was divided by the dissolved amount of the test specimen to obtain the V content present as carbides or carbonitrides. The above test was conducted three times for each test material, and the average value was used as the amount of V present as precipitates in the test material, i.e., $V_{ER}$.

[Creep rupture test]

Creep rupture tests were conducted on round-bar creep test specimens taken from the test materials. The creep rupture tests were conducted at 600°C × 186 MPa where the target rupture time of the base metal is 500 hours as an evaluation for early stages of use, and at 600°C × 157 MPa where the target rupture time of the base metal is 3000 hours as an evaluation for long-term use. The creep rupture test was conducted in accordance with JIS Z 2271:2010. The test material with a rupture time exceeding the target rupture time was designated as "A", the test material with a rupture time below the target rupture time but 90% or more of the target rupture time was designated as "B", and the test material with a rupture time below 90% was designated as "F".
Table 2 shows that the steel materials satisfying the requirements specified in the present invention have the targeted creep strength under both high and low stress conditions, i.e., good creep strength in the early stages of use and during long-term use.
In contrast, test No. A6 did not meet the targeted creep performance under high stress conditions because the V content present as precipitates in the steel, i.e., $V_{ER}$ was below the specified range, and thus the steel material did not have sufficient precipitation strengthening ability in the early stages of use.
Test Nos. A5, A13, A14, A16, C5, and E5 did not satisfy the targeted creep performance under low stress conditions because the $V_{ER}$ was above the predetermined range and there were many coarse V-containing precipitates in the as-manufactured steel, which promoted coarsening of precipitates during use and did not provide stable precipitation strengthening ability over a long term.
Test Nos. J1 and K1 did not satisfy the targeted creep performance under both low and high stress conditions because the V and C contents were below the range of the present invention, respectively, and V-containing precipitates were not sufficiently precipitated from the beginning of use to during use.
Furthermore, Test Nos. I1 and L1 did not meet the targeted creep performance under low stress conditions because the V and C contents exceeded the range of the present invention, respectively, which promoted coarsening of precipitates during use and did not provide stable precipitation strengthening ability over a long term.
From Table 2, it can be seen that steel materials satisfying the requirements specified in the present invention stably provide good creep strength in the early stages of use and during long-term use.

EXAMPLE 2

Ingots of steel materials B and D having the chemical compositions shown in Table 1 and M to Z having the chemical compositions shown in Table 3 were prepared by melting and casting in the laboratory, and then hot-forged and hot-rolled in sequence to form 15 mm in thickness. These steel materials were processed to plates 150 mm long and 150 mm wide.
The resulting plates were heat-treated at 1075°C for 0.5 hour for normalizing and 780°C for 1 hour for tempering to make test materials.

[Table 3]

Table 3

| Steel | Chemical composition (mass%, balance: Fe and impurities) | | | | | | | | | | | | | | | | | | | Middle value of Formula (ii) | Right hand value of Formula (ii) |
|---|---|---|---|---|---|---|---|---|---|---|---|---|---|---|---|---|---|---|---|---|---|
| | C | Si | Mn | P | S | Sn | As | Ni | Cr | Mo | W | V | Nb | B | N | Al | O | Nd | Others | | |
| M | 0.11 | 0.24 | 0.45 | 0.0132 | 0.0009 | 0.0006 | 0.0005 | 0.25 | 8.7 | 0.40 | 1.85 | 0.19 | 0.054 | 0.0025 | 0.042 | 0.011 | 0.009 | - | - | 0.0011 | 0.0336 |
| N | 0.10 | 0.28 | 0.38 | 0.0148 | 0.0010 | 0.0010 | 0.0012 | 0.24 | 8.6 | 0.36 | 1.71 | 0.18 | 0.041 | 0.0031 | 0.037 | 0.010 | 0.010 | 0.0120 | - | 0.0022 | 0.0304 |
| O | 0.12 | 0.30 | 0.49 | 0.0195 | 0.0015 | 0.0121 | 0.0008 | 0.20 | 8.3 | 0.30 | 2.06 | 0.23 | 0.042 | 0.0020 | 0.022 | 0.009 | 0.009 | - | - | 0.0129 | 0.0210 |
| P | 0.08 | 0.21 | 0.50 | 0.0060 | 0.0007 | 0.0009 | 0.0134 | 0.32 | 9.3 | 0.23 | 2.18 | 0.16 | 0.079 | 0.0038 | 0.068 | 0.012 | 0.008 | - | Cu: 0.10, Ti: 0.05, Ca: 0.0025 | 0.0143 | 0.0480 |
| Q | 0.13 | 0.32 | 0.48 | 0.0179 | 0.0020 | 0.0090 | 0.0017 | 0.18 | 8.4 | 0.49 | 1.62 | 0.24 | 0.050 | 0.0015 | 0.030 | 0.008 | 0.010 | 0.0180 | - | 0.0107 | 0.0242 |
| R | 0.09 | 0.19 | 0.35 | 0.0052 | 0.0005 | 0.0018 | 0.0095 | 0.30 | 9.4 | 0.25 | 1.90 | 0.17 | 0.080 | 0.0044 | 0.060 | 0.014 | 0.011 | 0.0095 | Co: 0.12, Ta: 0.03, Mg: 0.0013 | 0.0113 | 0.0496 |
| S | 0.11 | 0.17 | 0.45 | 0.0196 | 0.0003 | 0.0023 | 0.0181 | 0.34 | 8.4 | 0.25 | 1.61 | 0.17 | 0.030 | 0.0032 | 0.041 | 0.011 | 0.008 | - | - | 0.0204 | 0.0208 |
| T | 0.10 | 0.16 | 0.42 | 0.0201 | 0.0002 | 0.0185 | 0.0006 | 0.35 | 8.2 | 0.24 | 1.56 | 0.16 | 0.035 | 0.0018 | 0.038 | 0.012 | 0.008 | 0.0385 | Cu: 0.08, Co: 0.23 | 0.0191 | 0.0198 |
| U | 0.07 | 0.30 | 0.32 | 0.0190 | 0.0025 | <u>0.0210</u> | 0.0006 | 0.17 | 9.6 | 0.55 | 2.20 | 0.23 | 0.095 | 0.0023 | 0.021 | 0.013 | 0.015 | - | - | 0.0216 | 0.0220 |
| V | 0.07 | 0.29 | 0.33 | 0.0180 | 0.0026 | 0.0007 | <u>0.0230</u> | 0.16 | 9.5 | 0.54 | 2.09 | 0.23 | 0.110 | 0.0027 | 0.023 | 0.015 | 0.014 | - | - | 0.0237 | 0.0240 |
| W | 0.08 | 0.33 | 0.31 | 0.0198 | 0.0018 | 0.0112 | 0.0098 | 0.18 | 9.4 | 0.48 | 1.98 | 0.21 | 0.085 | 0.0035 | 0.025 | 0.015 | 0.014 | - | - | <u>0.0210</u> | 0.0204 |
| X | 0.09 | 0.34 | 0.30 | 0.0204 | 0.0019 | 0.0080 | 0.0125 | 0.18 | 9.5 | 0.50 | 2.08 | 0.22 | 0.072 | 0.0032 | 0.024 | 0.014 | 0.013 | - | - | <u>0.0205</u> | 0.0192 |
| Y | 0.10 | 0.21 | 0.44 | 0.0135 | 0.0007 | 0.0020 | - | 0.23 | 8.9 | 0.38 | 2.02 | 0.20 | 0.045 | 0.0022 | 0.040 | 0.009 | 0.008 | - | - | 0.0020 | 0.0330 |
| Z | 0.09 | 0.25 | 0.40 | 0.0138 | 0.0010 | - | 0.0018 | 0.24 | 9.0 | 0.38 | 1.98 | 0.19 | 0.047 | 0.0027 | 0.040 | 0.011 | 0.008 | 0.0012 | REM:0.0030 | 0.0018 | 0.0324 |

$0.0005 \leq Sn+As \leq -2 \times P+0.0600 \ldots$ (ii)

[V content in precipitates obtained by extracted residue analysis]

The mass of V in the residue was measured by the method described above for the test materials after normalizing and tempering.

[Charpy impact test/toughness]

Test materials that had been subjected to the above normalizing and tempering, as well as test materials that had undergone 5 cycles of heating-cooling heat cycles of "room temperature -> 600°C $\times$ 108 hours -> room temperature" in addition to the normalizing and tempering were prepared. Three 2mm V-notched full-sized Charpy impact test specimens were taken from the center of the plate in the direction of the thickness and machined with a notch, and subjected to Charpy impact testing. The Charpy impact test was conducted in accordance with JIS Z 2242 (2005).
The test was conducted at 20°C. Of the three specimens with an average value of 54 J or more of absorbed energy, those with all three specimens having an average value of 54 J or more of absorbed energy were designated "A" and the others were designated "B". On the other hand, those with an average value of the absorbed energy of the three specimens lower than 54 J were designated as "F".

[Creep rupture test]

In addition, round bar creep specimens were taken from the test materials with Charpy impact test result of A or B, and creep rupture tests were conducted. As an evaluation of long-term use, creep rupture tests were conducted at 600°C $\times$ 167 MPa, where the target rupture time of the base metal was 1000 hours. For some of the test materials, creep rupture tests were conducted at 600°C $\times$ 186 MPa, where the target rupture time of the base metal was 500 hours, and at 600°C $\times$ 157 MPa as an evaluation of long-term use, where the target rupture time of the base metal was 3000 hours. The creep rupture test was conducted in accordance with JIS Z 2271 (2010). One with a creep rupture time exceeding the target rupture time was designated as "A", and that below the target rupture time was designated as "F"

[Table 4]

Table 4

| Test No. | Steel | Left hand value of Formula (i) | $V_{ER}$ (mass%) | Right hand value of Formula (i) | Charpy impact test | | Creep rupture test | | | |
|---|---|---|---|---|---|---|---|---|---|---|
| | | | | | After normalizing /tempering | After repeated heating (cooling | 600°C× 167MPa | 600°C× 186MPa | 600°C× 157MPa | |
| B2 | B | 0.038 | 0.106 | 0.152 | A | A | - | A | A | Inventive example |
| D2 | D | 0.044 | 0.098 | 0.152 | A | A | - | A | A | |
| MI | M | 0.038 | 0.104 | 0.149 | A | A | A | A | A | |
| N1 | N | 0.040 | 0.097 | 0.150 | A | A | A | A | A | |
| O1 | O | 0.036 | 0.112 | 0.148 | A | A | A | - | - | |
| P1 | P | 0.044 | 0.090 | 0.152 | A | A | A | A | A | |
| Q1 | Q | 0.034 | 0.120 | 0.147 | A | A | A | - | - | |
| R1 | R | 0.042 | 0.093 | 0.151 | A | A | A | - | - | |
| SI | S | 0.038 | 0.091 | 0.149 | B | B | A | A | A | |
| T1 | T | 0.040 | 0.088 | 0.150 | B | B | A | A | A | |
| U1 | U | 0.046 | 0.113 | 0.153 | F | F | - | - | - | Comparative example |
| V1 | V | 0.046 | 0.112 | 0.153 | F | F | - | - | - | |
| W1 | W | 0.044 | 0.108 | 0.152 | B | F | - | - | - | Inventive example |
| X1 | X | 0.042 | 0.110 | 0.151 | B | F | - | - | - | |
| Y1 | Y | 0.040 | 0.110 | 0.150 | A | A | - | A | A | |
| Z1 | Z | 0.042 | 0.110 | 0.151 | A | A | - | A | A | |
| $-0.2×+0.060 \leq V_{ER} \leq -0.1×C+0.160...(i)$ | | | | | | | | | | |
| "-" indicates test was not performed. | | | | | | | | | | |

Table 4 shows that Steels U and V did not achieve the target toughness in both cases after normalizing and tempering and after repeated heating and cooling because the Sn and As contents exceeded the range of the present invention, respectively.

In contrast, the steels satisfying the requirements specified in the present invention exhibited good toughness after normalizing and tempering. In addition, for steels satisfying the above Formula (ii), good toughness is obtained not only after normalizing and tempering but also after additional repeated heating and cooling, and good creep strength is obtained stably in the early stages of use and during long-term use.

Steels W and X did not achieve the target toughness after additional repeated heating and cooling because the formula relating to the total Sn and As content and P did not satisfy the requirement of the present invention.

Thus, it has been found that when Sn and As are included for the purpose of enhancing corrosion resistance, satisfying the above Formula (ii) results in excellent toughness even after repeated heating and cooling, as well as stable and good creep strength in the early stages of use and during long-term use.

INDUSTRIAL APPLICABILITY

According to the present invention, excellent creep strength can be stably obtained in heat-resistant ferritic steel when used at high temperatures. Therefore, the heat-resistant ferritic steel of the present invention can be suitably used in equipment used at high temperatures, such as boilers for power generation.

**Claims**

1. A heat-resistant ferritic steel having a chemical composition comprising, by mass%,

   C: 0.07 to 0.14%,
   Si: 0.15 to 0.35%,
   Mn: 0.30 to 0.55%,
   P: 0.0250% or less,
   S: 0.0030% or less,
   Ni: 0.15 to 0.35%,
   Cr: 8.0 to 9.7%,
   Mo: 0.20 to 0.60%,
   W: 1.50 to 2.30%,
   V: 0.16 to 0.25%,
   Nb: 0.020 to 0.120%,
   B: 0.0010 to 0.0050%,
   N: 0.010 to 0.080%,
   Al: 0.020% or less, and
   O: 0.020% or less,
   with the balance Fe and impurities,
   wherein the chemical composition satisfies Formula (i) below:

   $$-0.2 \times C + 0.060 \leq V_{ER} \leq -0.1 \times C + 0.160 \qquad \ldots \text{(i)},$$

   where the meaning of each symbol in Formula (i) is as follows:
   C: C content in the steel (mass %)
   $V_{ER}$: V content in precipitates obtained by extracted residue analysis (mass %).

2. The heat-resistant ferritic steel according to claim 1, wherein the chemical composition contains, in lieu of a part of Fe, by mass%, one or more selected from

   Sn: 0.0200% or less, and
   As: 0.0200% or less.

3. The heat-resistant ferritic steel according to claim 2, wherein the chemical composition contains, by mass%,

   P: 0.0030 to 0.0250%, and

satisfies Formula (ii) below:

$$0.0005 \leq Sn + As \leq -2 \times P + 0.0600 \ \ldots . \ (ii),$$

where the element symbols in the above formula represent the content (mass %) of each element.

4. The heat-resistant ferritic steel according to any of claims 1 to 3, wherein the chemical composition contains, in lieu of a part of Fe, by mass%,
Nd: 0.0005 to 0.0400%.

5. The heat-resistant ferritic steel according to any of claims 1 to 4, wherein the chemical composition contains, in lieu of a part of Fe, by mass%, one or more of selected from:

Cu: 0.50% or less,
Co: 0.50% or less,
Ti: 0.20% or less,
Ta: 0.20% or less,
Ca: 0.0150% or less,
Mg: 0.0150% or less, and
REM: 0.0400% or less.

## INTERNATIONAL SEARCH REPORT

| International application No. |
|---|
| **PCT/JP2021/026457** |

### A. CLASSIFICATION OF SUBJECT MATTER

*C22C 38/00*(2006.01)i; *C22C 38/54*(2006.01)i; *C21D 6/00*(2006.01)n; *C21D 8/02*(2006.01)n
FI:   C22C38/00 302Z; C22C38/54; C21D6/00 101K; C21D8/02 D

According to International Patent Classification (IPC) or to both national classification and IPC

### B. FIELDS SEARCHED

Minimum documentation searched (classification system followed by classification symbols)

C22C38/00-38/60; C21D6/00; C21D8/02

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2009-293063 A (SUMITOMO METAL INDUSTRIES, LTD.) 17 December 2009 (2009-12-17)<br>    paragraphs [0058]-[0074], [0089]-[0105] | 1-2, 4-5 |
| A | | 3 |
| X | JP 2001-192781 A (SUMITOMO METAL INDUSTRIES, LTD.) 17 July 2001 (2001-07-17)<br>    claims, paragraphs [0001], [0018]-[0039], [0049]-[0062] | 1-2, 4-5 |
| A | | 3 |
| A | WO 2016/136888 A1 (NATIONAL INSTITUTE FOR MATERIALS SCIENCE) 01 September 2016 (2016-09-01)<br>    claims, paragraphs [0001], [0045] | 1-5 |
| A | JP 09-287402 A (HITACHI, LTD.) 04 November 1997 (1997-11-04)<br>    paragraph [0085] | 1-5 |
| A | JP 2006-241482 A (NATIONAL INSTITUTE FOR MATERIALS SCIENCE) 14 September 2006 (2006-09-14) | 1-5 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **14 September 2021** | **28 September 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/026457**

| Patent document cited in search report | | | Publication date (day/month/year) | Patent family member(s) | Publication date (day/month/year) |
|---|---|---|---|---|---|
| JP | 2009-293063 | A | 17 December 2009 | (Family: none) | |
| JP | 2001-192781 | A | 17 July 2001 | (Family: none) | |
| WO | 2016/136888 | A1 | 01 September 2016 | US 2018/0051352 A1 claims, paragraphs [0001], [0117] EP 3263732 A1 | |
| JP | 09-287402 | A | 04 November 1997 | (Family: none) | |
| JP | 2006-241482 | A | 14 September 2006 | (Family: none) | |

Form PCT/ISA/210 (patent family annex) (January 2015)

**EP 4 372 116 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 61231139 A
- JP 7062497 A
- JP 8218154 A
- JP 10287960 A
- JP 2007092123 A